# EUROPEAN PATENT SPECIFICATION

(11) **EP 0 467 309 B1**
(45) Date of publication and mention of the grant of the patent: **28.09.1994**
(21) Application number: 91111872.7
(22) Date of filing: 16.07.1991
(51) Int. Cl.: F16L 47/02, B29D 23/22, B29C 53/58

(54) **Joint sleeve and tube fitting**
Manschettenverbindung und Rohranschlussstück
Joint à manchon et raccord de tuyaux

(30) Priority: 16.07.1990 JP 188821/90
(43) Date of publication of application: 22.01.1992
(73) Proprietor: TOKUSHU KOGYO KABUSHIKI KAISHA, Yao-shi, Osaka (JP)
(72) Inventor: Kishida, Yoshiyuki, c/o Tokushu Kogyo K.K., Yao-shi, Osaka (JP)
(74) Representative: Glawe, Delfs, Moll & Partner

(56) References cited:
- EP-A- 0 159 733
- EP-A- 0 301 864
- EP-A- 0 402 200
- GB-A- 1 149 716
- US-A- 3 047 703

## Description

This invention relates to a joint sleeve and a tube fitting made of a thermoplastic macromolecular material for use in piping.

Synthetic resins and macromolecular materials such as synthetic rubbers are quickly taking the place of metals and ceramics in various fields because of their high formability, good water and chemical resistance and light weight. For example, macromolecular materials are now used for various pipes such as iron pipes, lead pipes, copper pipes, stainless steel pipes, clay pipes and earthenware pipes, and joints for joining such pipes together and valve plugs.

In order to connect without leakage pipes, joints and valve plugs made of such macromolecular materials, especially thermoplastic resins or rubbers and thus to achieve smooth piping work, the joint portions have to be sealed tightly. Adhesives are now available for use with ABS resin, polyvinyl chloride and polystyrene. Simply by applying such adhesives to a joint portion and hardening, a perfect seal can be formed. But as for many other materials such as polyolefine, polyamide, polyacetal and fluororesins, no suitable adhesives are available. Thus, in connecting pipes and the like made of such macromolecular materials for which no suitable adhesive is available, two parts are softened or melted at the joint portion by external heating method (by flames or in a tube furnace) to connect the two parts quickly and are cooled to harden. But with the external heating method, it was extremely difficult to heat the joint portion uniformly and to maintain the state of softening or melting at a desired level.

In order to solve this problem, the present applicant proposed in Japanese Patent Application 1-10689 a joint sleeve in which a linear heating element covered with a macromolecular material such as enamel or varnish is helically wound on a hollow cylindrical body to form a coil. The heating element is heated by passing a current to melt the covering and fuse the adjacent turns of the coil together. But in forming or using such a joint sleeve, if the linear heating element is heated excessively, shortcircuiting may occur due to evaporation or cracks of the covering.

The present applicant also proposed in Japanese Patent Application 1-173617 a sleeve having a wire covered with synthetic resin and having at least part of the adjacent turns fused together. This sleeve has the same problems as those with the above-mentioned prior art.

Further, there is disclosed in the latter application a tube fitting in which a covered element wire of the linear heating element is integrally formed. But it has the same problems as above.

To prevent these problems it was proposed in Japanese Unexamined Patent Publication 61-130695 to provide a covering of a heat resistant material such as varnish or thermoset resin. But since such a covering evaporates at about 300 C, there is still a danger of shortcircuiting.

A joint sleeve Comprising a coil made by helically winding a covered heat element wire, that wire comprising a linear heating element, a heat resitant and electrically insulating layer provided arround that linear heating element, and an outer covering layer, is known from GB-A-1 149 716.

Also, in any of these prior arts, it is apparent that if the external covering layer and the linear heating element are not rigidly bonded together, the linear heating element will corrode gradually due to the infiltration of water and chemicals, thus causing various problems such as poor connection of the pipes and deformation of the joint portion.

EP-A-0 301 864 discloses a joint sleeve comprising a helically wound linear heating element, in which a fiber layer is used as a heat resistant and electrically insulating layer. The adhesivness between the coil and an outer resin layer is improved by removing an oxidized film of passive state at the surface of the metal wire.

It is an object of this invention to prevent shortcircuiting of the linear heating element and to provide a strong bond between the outer covering layer and the linear heating element.

According to the present invention this object is achieved by a tube joining element for making heat fused tube joints, said element comprising a coil formed of a helically wound heating wire (1), said wire comprising
a linear heating element (2),
a heat resistant and electrically insulating layer (6) surrounding said heating element (2), and
an outer covering layer (7),
**characterzied** in that
said heat resistance and electrically insulating layer is a fiber layer (6),
an oxide film (3) is formed on the surface of said heating element,
a primer layer (4) is provided around the surface (3) of said heating element (2),
a polymer layer (5) is provided between said primer layer (4) and said fiber layer (6).

In the covered heating element wire the insulating fiber layer is securely bonded to the primer layer. Thus, no shortcircuiting will occur even if the outer covering layer is melted. Further, part of the resin forming the polymer layer and the external covering layer infiltrates into the rough surface and gaps of the fiber layer to rigidly hold the linear heating element in position through the strong bond between primer layer and the polymer layer. Thus, no poor bond occurs between the linear heating element and the resin. This prevents bad connection at the joints due to corrosion.

Thus, the linear heating element can be rigidly retained in a joint portion of pipes or pipe fittings just like a reinforcing steel bar retained in concrete.

Other features and objects of the present invention will become apparent from the following description taken with reference to the accompanying drawings, in which:
Fig. 1 is a cross-sectional view of the covered heating element wire for use in the sleeve and the tube fitting according to this invention;
Fig. 2 is a front view of the linear heating element provided with the fiber layer;
Fig. 3 is a cross-sectional view of another embodiment of the covered heating element wire;
Fig. 4 is a vertical sectional view of the covered heating element wire wound around a core;
Fig. 5 is a vertical sectional view of the sleeve formed of the covered heating element wire;
Fig. 6 is a front view of another embodiment of the sleeve;
Fig. 7 is an end view of the same;
Figs. 8 - 10 are front views of some other embodiments of the sleeve;
Fig. 11 is a vertical sectional view showing how the sleeve is used; and
Fig. 12 is a vertical sectional view showing how the coil is used in the tube fitting.

First, description will be made on a linear heating element for use in the sleeve according to this invention.

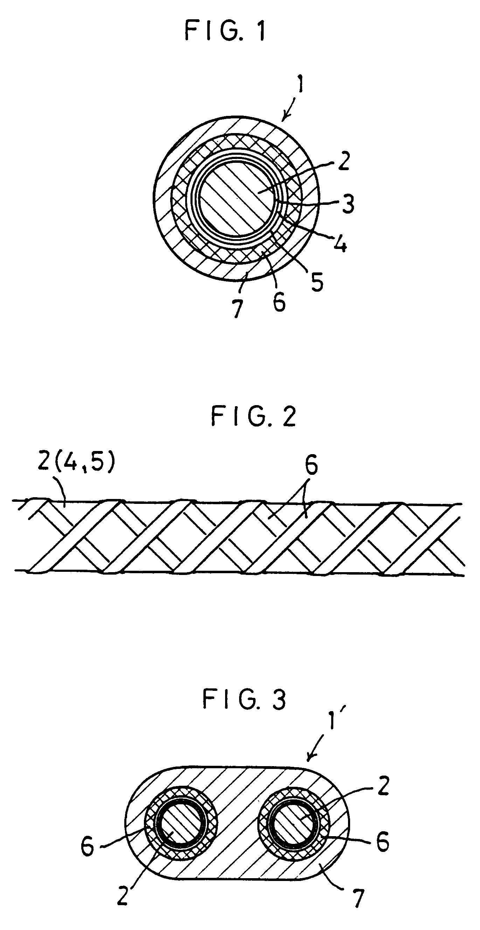

As shown in Fig. 1, a covered heating element wire 1 comprises a linear heating element 2 such as a copper wire, nickel wire, nichrome wire or carbon wire, an oxide film 3 surrounding the heating element 2, a primer layer 4 surrounding the oxide film 3, a polymer layer 5 surrounding the primer layer 4, a heat-resistant and insulating fiber layer 6 integral with the polymer layer 5 and an outer covering layer 7.

The oxide film 3 is formed by washing the surface of the linear heating element 2 with toluene and exposing it to the atmosphere for about 1 - 10 minutes. In forming the oxide film 3, the linear heating element 2 may be subjected to chemical surface treatment such as immersing in an acid solution or to mechanical treatment such as grinding or peeling of the surface and then exposing it to the atmosphere. Also, the surface of the linear heating element 2 may be formed with fine roughness beforehand.

The primer layer 4 is formed by applying a solution composed of 20 % by weight of epoxy resin such as EPIKOTE (made by Shell Oil), 10 % by weight of EPOMATE (made by Shell Oil) and 70 % by weight of toluene to the outer surface of the oxide film 3 and passing the wire through a furnace to bake at about 180 - 200 C. The primer layer 4 is firmly bonded to the oxide film 3. It also serves as an anchor coat layer for the polymer layer 5 formed on its outer surface.

A thermoplastic polymer having a good affinity (such as ADMER having functional groups, made by Mitsui Oil Chemical) is applied to the outer surface of the primer layer 4 to form the polymer layer 5. It may be firmly bonded to the primer layer 4 by heating to a predetermined temperature or may be cooled to harden and bonded to the primer layer 4 by heating after forming the fiber layer 6.

After forming the polymer layer 5, the fiber layer 6 having a large mesh size as shown in Fig. 2, is formed by winding or knitting on the layer 5 a heat resistant, electrically insulating fiber such as glass fiber, glass fiber and cotton yarn, or glass fiber and a polyamide imide fiber (such as KEPLER, made by Dupon). The wire thus made is heated to 80 - 190 C to bond the fiber layer 6 and polymer layer 5 together.

If the polymer layer 5 is allowed to harden without heating as described above, the primer layer 4 and polymer layer 5 are bonded together at this time.

The fiber layer 6 may be formed on the outer surface of the primer layer 4 before forming the polymer layer 5. In such a case, ADMER or the like is applied to and allowed to be soaked into the fiber layer. Then the fiber layer 6 is heated to bond it to the polymer layer 5 and the primer layer 4.

The outer covering layer 7 is formed either directly thereafter if the polymer layer 5 is still fluid or after heating until the layer 5 is fluidized if it has hardened, by extruding a thermoplastic macromolecular material, e.g. a polyolefine such as polyethylene, polypropylene or polybutene. The covering layer may be formed on a plurality of linear heating elements simultaneously as shown at 1' in Fig. 3.

During the extrusion, part of the resin of the polymer layer 5 infiltrates into the gaps in the fiber layer 6 whereas part of the polymer of the covering layer 7 infiltrates into the gaps in the fiber layer 6 while filling up roughness on the outer surface of the fiber layer 6. Thus, the fiber layer 6 is rigidly held in position. A foaming agent may be added to the covering resin in the amount of 1 - 3 % by weight to allow smoother infiltration of resin into the gaps or the rough surface on the fiber layer 6 and improve the bonding properties.

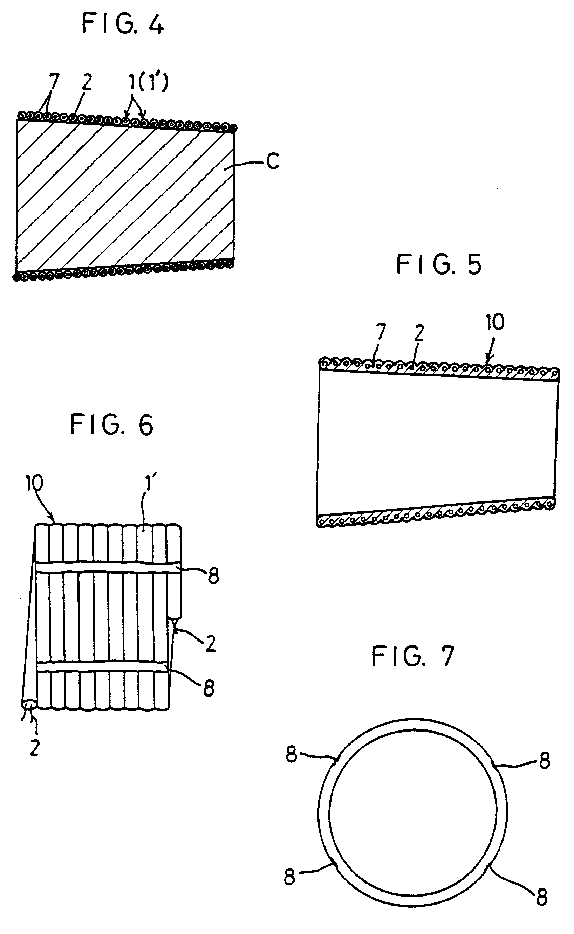

The covered heating element wire 1 or 1' is wound helically around a truncated conical core C with no gaps as shown in Fig. 4. When an electric current is passed through the linear heating element 2 in this state, the outer covering 7 is melted by the heat from the heating element 2, fusing the adjacent turns of element wire together. Thus, a sleeve 10 as shown in Fig. 5 is formed.

A single element wire 1 may be wound helically around the core C or two element wires 1 may be wound helically around it in parallel to each other.

Next, we shall describe another method for forming the sleeve 10.

By winding the element wire 1' comprising two linear heating elements 2 as shown in Fig. 3 around the core C, a helical coil as shown in Fig. 6 is formed. Then by twisting the two linear heating elements 2 at one end to shortcircuit them while leaving them exposed at the other end thereof as terminals, an electric circuit is formed. But since the helical coil is unstable in shape in this state, a heating device (any of the hot gas welding, hot-rod, hot-blade or hot-plate welding, impulse welding, high frequency welding and ultrasonic welding, which are ordinarily used for plastic welding, may be used but an inner-heat or outer-heat type hot plate is most preferable because it is easy to handle and its installation cost is low) heated separately to a temperature higher than the melting point of the covering material (e.g. 150 C if the covering material is polyethylene) is brought into contact with the coil at least at one point of the entire circumference to form a covering fusing portion 8. Thus, a joint sleeve 10 as shown in Figs. 6 and 7 is obtained. Namely, the moment the heating device touches the surface of the helical coil, the covering material melts, fusing the adjacent turns of the element wires instantly. As soon as the heating device is removed, the molten portion hardens. Thus, compared with the above-described method in which the entire covered wire is heated and melted by passing an electric current and allowed to cool thereafter, the amount of polymer melted and cooled is so small that the covering molten portion 8 can be formed in about one second. Thus, this method is applicable to mass-production.

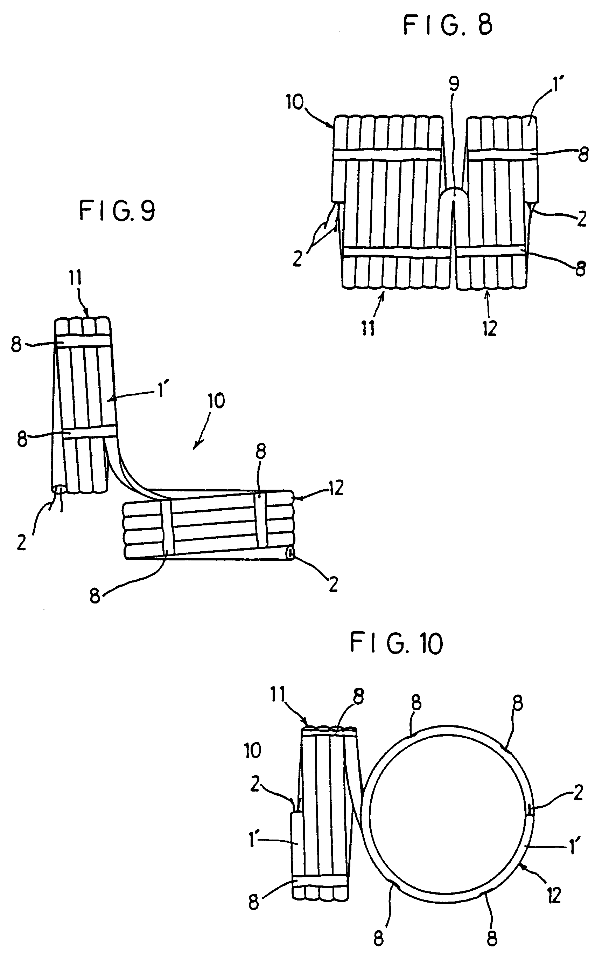

Fig. 6 shows a helical coil wound in one direction. It may be wound either clockwise or counterclockwise. Also, as shown in Fig. 8, the covered element wire 1 may have the direction of winding changed at a point 9 to form two helical coils 11 and 12, the former being wound clockwise while the latter being wound counterclockwise. The advantage of this arrangement is that the helical coils 11 and 12 can be arranged so that their axes will intersect each other at any desired angle.

But even the sleeve 10 shown in Fig. 6 can be separated into helical coils 11 and 12 by cutting off all the covering fusing portions 8 except one at boundary between the coils 11 and 12. Thus, the coils 11 and 12 can be positioned so that their axes cross each other at any desired angle as shown in Figs. 9 and 10. Thus, the utility of this type of sleeve is as wide as the helical coil shown in Fig. 8 having the inflection point 9.

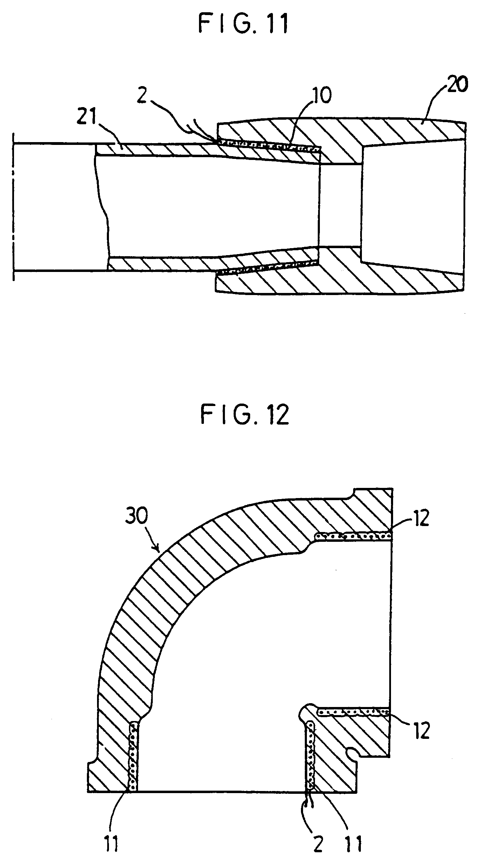

Fig. 11 shows how to use the above-described sleeves 10.

As shown in the figure, a pipe 21 made of a thermoplastic synthetic resin and having the sleeve 10 put on its leading end is pushed lightly into a socket 20 made of a thermoplastic synthetic resin. The sleeve 10 will soften by passing a current through the linear heating element 2 in the sleeve 10. The electric current is stopped at this point and the sleeve is allowed to cool while pressing the socket 20 lightly against the pipe 21 to bond them together through the sleeve 10.

Numeral 30 in Fig. 12 designates an elbow. It has a body formed by injection molding in a die for injection molding with the sleeves 10 as shown in Fig. 9 or 10 placed beforehand in the die. Simultaneously with the molding the coils 11 and 12 are fused to the elbow body.

The sleeve 10 to be fused to the body may be the one shown in Fig. 5. Also, the coil wound around the core C but not yet formed into the sleeve 10 may be fused to the elbow body.

The term "tube fitting" herein used include not only the above-described elbow but any other joint such as a T-shaped joint, Y-shaped joint or return joint.

### [Experiment Example 1]

A nichrome wire 0.4 mm wide and 0.2 mm thick was washed with toluene and left as it is for 10 minutes. Then a solution having 20 % by weight of EPIKOTE and 10 % by weight of EPOMATE dissolved in toluene was applied to the wire and heated to 180 C to bake it. Glass fiber was put on the surface of the nichrome wire by knitting. Then ADMER was applied thereto to let it soak and heated to 160 C. A polyethylene covering was formed by extrusion on two of the nichrome wires disposed in parallel to each other to form a flat (3.0 mm in width and 1.0 mm in thickness) polyethylene covered heating element wire containing two parallel nichrome wires. This wire is wound around a tapered (1/30) core by 10 turns with no gaps formed therebetween, with both terminals at the large-diameter side of the core. The helical coil thus made is brought into light contact with the end face of an iron heater heated to 150 C to form four covering fused portions. Since the adjacent turns of covering can be fused together by melting a small amount of polyethylene covering material, the time of contact of the heating device can be reduced to a minimum. Cooling was quick too. In one second or so, a joint sleeve having a larger inner diameter of 60 mm, a smaller inner diameter of 58 mm and a length of 30 mm was obtained stably. The sleeve thus obtained was put on the end of a polyethylene pipe. This pipe was pushed lightly into a socket made of polyethylene. Then a secondary battery was connected to the nichrome wire in the joint sleeve and a 1.5 A current was supplied for 2.5 minutes. When the covering of the joint sleeve has softened completely, the electricity was turned off and the sleeve was cooled while lightly pushing the pipe. Thus, the socket and the pipe was rigidly bonded together. In order to see the state of the fused portion, the connecting portion was divided axially into 10 equal parts. The joint sleeve, socket and pipe have been completely fused together to such an extent that their boundaries are not recognizable. The nichrome wires are arranged in an orderly manner at equal intervals and sealed in polyethylene and fiber layer and no gap was found leading to the interior of the pipe.

Further, the nichrome wires were tested for the tensile strength. The nichrome wires were broken at the portions gripped at a tensile strength of 3 kg, which shows that they are bonded rigidly to the surrounding structure.

### [Experiment Example 2]

The sleeve prepared in the experiment example 1 was mounted in a die for extrusion forming and an elbow having the nichrome wires wound on its inner surface in a coil shape was formed by injecting polyethylene.

The elbow was put on the end of a polyethylene pipe. After passing a 1.5 A current through the nichrome wires for 2.5 minutes, the elbow was let to cool. As a result the elbow and pipe were bonded together perfectly. The bonded portion was divided axially into eight equal parts to check the sections. The nichrome wires were arranged in an orderly manner at substantially equal intervals. No adjacent wires are in contact with each other.

The results of tensile strength test for nichrome wires were substantially the same as those in experiment example 1.

## Claims

1. A tube joining element for making heat fused tube joints, said element comprising a coil formed of a helically wound heating wire (1), said wire comprising
a linear heating element (2),
a heat resistant and electrically insulating layer (6) surrounding said heating element (2), and
an outer covering layer (7),
**characterzied** in that
said heat resistance and electrically insulating layer is a fiber layer (6),
an oxide film (3) is formed on the surface of said heating element,
a primer layer (4) is provided around the surface (3) of said heating element (2) on said oxide film, and
a polymer layer (5) is provided between said primer layer (4) and said fiber layer (6).

2. A tube joining element as claimed in claim 1, wherein the surface (3) of said heating element (2) is roughened.

3. A tube joining element as claimed in claim 1 or 2, wherein an oxide film (3) is formed on the surface of said heating element (2).

4. A tube joining element as claimed in one of claims 1 to 3, wherein at least part of the adjacent turns of said outer covering layer (7) is fused together at least at one location (8) on the circumference of the coil.

5. A tube joining element as claimed in any of claims 1 to 4, wherein the tube joining element is in the form of a sleeve to be interposed between two tube members to be joined.

6. A tube joining element as claimed in one of claims 1 to 4, wherein said tube joining element is a tube fitting (20, 30) having said coil provided on an inner or outer tube coupling surface thereof.

## Patentansprüche

1. Rohrverbindungselement zur Herstellung thermisch geschweißter Rohrverbindungen, wobei das Element eine Spule aus einem wendelförmig gewickelten Heizdraht (1) aufweist, wobei der Heizdraht umfaßt
ein lineares Heizelement (2),
eine das Heizelement (2) umgebende, hitzebeständige und elektrisch isolierende Schicht (6), und
eine äußere Abdeckschicht (7),
dadurch **gekennzeichnet,** daß die hitzebeständige und elektrisch isolierende Schicht eine Faserschicht (6) ist,
daß ein Oxidfilm (3) auf der Oberfläche des Heizelements gebildet ist,
daß eine Grundierschicht (4) um die Oberfläche (3) des Heizelementes (4) herum auf dem Oxidfilm vorgesehen ist und daß eine Polymerschicht (5) zwischen der Grundierschicht (4) und der Faserschicht (6) vorgesehen ist.

2. Rohrverbindungselement nach Anspruch 1,
bei dem die Oberfläche (3) des Heizelements (2) aufgerauht ist.

3. Rohrverbindungselement nach Anspruch 1 oder 2,
bei dem ein Oxidfilm (3) auf der Oberfläche des Heizelementes (2) gebildet ist.

4. Rohrverbindungselement nach einem der Ansprüche 1 bis 3,
bei dem mindestens ein Teil der benachbarten Windungen der äußeren Abdeckschicht (5) an mindestens einer Stelle (8) am Umfang der Spule miteinander verschmolzen sind.

5. Rohrverbindungselement nach einem der Ansprüche 1 bis 5, bei dem das Rohrverbindungselement die Form einer Hülse zum Einsetzen zwischen zwei zu verbindenden Rohrelementen hat.

6. Rohrverbindungselement nach einem der Ansprüche 1 bis 4, bei dem das Rohrverbindungselement ein Rohranschlußstück (20, 30) ist, das auf einer inneren oder äußeren Rohrkupplungsfläche mit der Spule versehen ist.

## Revendications

1. Elément de raccordement de tubes pour réaliser des raccords de tubes thermosoudés, ledit élément comprenant une bobine constituée d'un fil électrique chauffant enroulé en hélice (1), ledit fil électrique comprenant
un élément chauffant linéaire (2),
une couche thermorésistante et électriquement isolante entourant ledit élément chauffant (2), et
une couche extérieure de revêtement (7), caractérisé en ce que
ladite couche thermorésistante et électriquement isolante est une couche de fibre (6),
une pellicule d'oxyde (3) est formée sur la surface dudit élément chauffant,
une première couche (4) est prévue autour de la surface (3) dudit élément chauffant (2) sur ladite pellicule d'oxyde, et
une couche polymère (5) est prévue entre ladite première couche (4) et ladite couche de libre (6).

2. Elément de raccordement de tubes selon la revendication 1, dans lequel la surface (3) dudit élément chauffant (2) est rendue rugueuse.

3. Elément de raccordement de tubes selon la revendication 1 ou 2, dans lequel une pellicule d'oxyde (3) est formée sur la surface dudit élément chauffant (2).

4. Elément de raccordement de tubes selon l'une quelconque des revendications 1 à 3, dans lequel au moins une partie des spires adjacentes de ladite couche extérieure de revêtement (7) est assemblée par fusion à au moins un endroit (8) sur la circonférence de la bobine.

5. Elément de raccordement de tubes selon l'une quelconque des revendications 1 à 4, dans lequel l'élément de raccordement de tubes est réalisé sous la forme d'un manchon à interposer entre deux éléments de tubes à raccorder.

6. Elément de raccordement de tubes selon l'une quelconque des revendications 1 à 4, dans lequel ledit élément de raccordement de tubes est un raccord de tubes (20, 30) sur une surface intérieure ou extérieure de couplage de tubes duquel est prévue ladite bobine.
